# FASCICULE DE BREVET EUROPEEN

(11) **EP 4 642 641 B1**
(45) Date de publication et mention de la délivrance du brevet: **04.11.2026**
(21) Numéro de dépôt: 23840978.3
(22) Date de dépôt: 26.12.2023
(51) Int. Cl.: B32B 17/10

(54) **DISPOSITIF AVEC VITRAGE FEUILLETÉ DE VÉHICULE ET UNE CAMÉRA**
VORRICHTUNG MIT EINER LAMINIERTEN AUTOVERGLASUNG UND EINER KAMERA
DEVICE WITH A LAMINATED AUTOMOTIVE GLAZING AND A CAMERA

(30) Priorité: 28.12.2022 FR 2214606
(43) Date de publication de la demande: 05.11.2025
(73) Titulaire: Saint-Gobain Sekurit France, 60150 Thourotte (FR)
(72) Inventeur: LAUDEREAU, Jean-Baptiste, 93300 AUBERVILLIERS (FR); BERARD, Mathieu, 93300 AUBERVILLIERS (FR); MIMOUN, Emmanuel, 93300 AUBERVILLIERS (FR)
(74) Mandataire: Saint-Gobain Recherche
(86) Numéro de dépôt international: PCT/EP2023/087806
(87) Numéro de publication internationale: WO 2024/141530

(56) Documents cités:
- FR-A1- 3 057 499
- US-A1- 2022 128 766
- US-A1- 2022 136 893

## Description

### DOMAINE TECHNIQUE DE L'INVENTION

L'invention se rapporte à un vitrage feuilleté, en particulier un pare-brise, dans un véhicule notamment routier ou ferroviaire en association avec une caméra comprenant un capteur d'image et un moyen optique.

### ARRIERE-PLAN TECHNOLOGIQUE DE L'INVENTION

Pour assurer des fonctions d'aide à la conduite ou ADAS (Advanced Driver Assistance Systems), il est nécessaire de pouvoir acquérir des images de la route sur laquelle circule le véhicule embarquant le vitrage feuilleté. Il est connu pour ce faire de placer une caméra dans l'habitacle dans un pare-brise de véhicule automobile en face d'une zone transparente dite caméra en partie haute du pare-brise.

FR 3 057 499 A1 divulgue un dispositif comportant un pare-brise feuilleté de véhicule automobile, comprenant une feuille de verre dite feuille extérieure comprenant une première face principale dite F1 et une deuxième face principale dite F2, une feuille de verre dite feuille intérieure comprenant une troisième face principale dite F3 et une quatrième face principale dite F4, un intercalaire de feuilletage en matière polymère entre la face F2 et la face F3, un trou au niveau de la zone caméra, qui traverse au moins une des 2 feuilles de verre et qui est comblé par un dispositif optique, une caméra dotée d'un capteur d'image, du type détecteur CCD ou CMOS, le dit capteur d'image étant disposé en regard de F4 et sensiblement parallèlement à la surface du pare-brise, ledit dispositif optique étant adapté pour dévier un faisceau lumineux arrivant sensiblement horizontalement sur la face du parebrise exposée à l'extérieur du véhicule et le faire converger sensiblement sans déformation vers le dispositif de captation d'image.

L'invention propose un système vitrage caméra alternatif.

### RESUME DE L'INVENTION

Un aspect de l'invention concerne un dispositif comportant un vitrage feuilleté de véhicule, notamment routier (véhicule individuel ou de transport en commun) ou ferroviaire, en particulier pare-brise, lunette arrière, vitrage latéral (en particulier pour réaliser un rétroviseur gauche et/ou droit), vitrage en particulier destiné à être incliné en position montée suivant un angle d'inclinaison prédéfini, comprenant :
- Une feuille de verre dite feuille extérieure comprenant une première face principale dite F1 (destinée à être orientée vers l'extérieur) et une deuxième face principale dite F2,
- Une feuille de verre dite feuille intérieure comprenant une troisième face principale dite F3 et une quatrième face principale dite F4 (destinée à être orientée vers l'habitacle),
- Un intercalaire de feuilletage en matière polymère (notamment thermoplastique, mono ou multifeuillets) entre la face F2 et la face F3,
- une zone transparente dite zone caméra (incluant une zone transparente de la première feuille de verre)
le dispositif comportant, en regard de la zone caméra du vitrage feuilleté, une caméra (numérique), avec un axe optique O, comportant un capteur d'image (numérique), un moyen optique ayant une fonction d'imagerie optique, le capteur d'image (CCD, CMOS etc, de taille submétrique, notamment d'au plus 5 cm) est positionné entre la face F2 et F3 apte à recevoir des rayons lumineux traversant la feuille extérieure dans la zone caméra, le capteur d'image comportant une pluralité de premiers pixels dont un pixel central, l'axe optique O passant par ledit pixel central, le moyen optique étant positionné entre la face F1 et le capteur d'image, le moyen optique ayant une fonction d'imagerie optique, (de préférence entre la face F2 et le capteur d'image), le vitrage feuilleté comprenant, entre la face F1 et le capteur d'image (et même entre la face F2 et le capteur d'image ou mieux entre la face F2 et entre ledit moyen optique), un déflecteur, le déflecteur étant un élément diffractif (notamment un premier hologramme), configuré pour défléchir un rayon lumineux extérieur A arrivant sur la face F1 du vitrage feuilleté avec un angle d'incidence non nul (de préférence d'au moins 30° si véhicule terrestre, automobile) par rapport à la normale à la feuille extérieure et le rediriger suivant l'axe optique O sur le pixel central.

En intégrant une caméra au sein du vitrage de l'invention cela permet de libérer de l'espace dans l'habitacle, cela offre la possibilité de réduire la largeur de la zone caméra.

Lorsque ce vitrage est oblique (fortement incliné), le capteur d'image a alors la même inclinaison que le vitrage feuilleté et est donc incliné vers le ciel. Dans un vitrage proche ou à la verticale (camion, et transport en commun : bus, car etc), en hauteur, il est nécessaire de voir la route en bas.

Grâce à l'invention, il est possible d'intégrer un capteur d'image dans un vitrage feuilleté tout en étant capable d'obtenir des images requises de la route, du sol à 1m, lorsque le véhicule circule sur la route. Grâce à l'invention, une plus grande partie du champ de vision est consacrée à l'imagerie de la route.

En effet, l'usage du déflecteur permet de dévier les rayons lumineux extérieurs arrivant avec un angle d'incidence non nul vers le capteur d'image de la caméra. Ainsi, bien que le vitrage feuilleté soit destiné à être incliné, le capteur d'image reçoit des rayons lumineux arrivant sur la face F1 du vitrage feuilleté selon un axe optique faisant un angle non nul par rapport à la normale à la feuille extérieure, avec un encombrement minimal ou encore, bien que le vitrage soit trop haut, il est possible de voir ce qui se passe près de l'avant du véhicule.

Entre le capteur d'image et le déflecteur, le vitrage feuilleté est transparent (intercalaire transparent etc) de préférence clair, incolore.

Le vitrage feuilleté peut présenter une ou plusieurs caractéristiques complémentaires parmi les suivantes, considérées individuellement ou selon toutes les combinaisons techniquement possibles :

Selon un mode de réalisation, le rayon lumineux A a un angle d'incidence θ avec la normale à la feuille extérieure du vitrage feuilleté 10 et cet angle θ est égal à au plus θ1 correspondant à un angle de la face F1 avec la normale au vitrage dans la zone caméra en position montée.

Selon un mode de réalisation, le déflecteur et/ou le moyen optique peuvent être sur la face F1 mais de préférence côté face F2 (et même le déflecteur au moins est surface F2) afin de les protéger des rayures ; Ainsi le moyen optique et/ou le déflecteur sont de préférence côté face F2, formé sur la face F2 ou entre la face F2 et le capteur d'image.

Selon un mode de réalisation, le déflecteur est à déflexion variable angulairement, variant en fonction de l'angle d'incidence sur le déflecteur (voire même du point d'incidence sur le déflecteur). Cela permet d'avoir un champ de vision optimal.

Selon un mode de réalisation, le déflecteur est un premier hologramme gravé de préférence sur la face F2 ou le déflecteur est un premier hologramme en volume, de préférence posé ou collé sur la face F2.

Selon un mode de réalisation, l'hologramme en volume est réalisé dans un matériau photopolymère, notamment sous forme d'un film collé ou posé sur la face F2 ou un revêtement sur la face F2 (nue ou revêtue d'un revêtement fonctionnel transparent comme une couche athermique, électroconductrice etc).

Selon un mode de réalisation, le moyen optique est une lentille convergente, notamment configuré pour faire converger les rayons lumineux incidents sur le capteur d'image.

Selon un mode de réalisation, le moyen optique est un hologramme formant lentille convergente, positionné entre le déflecteur et le capteur d'image, notamment configuré pour faire converger les rayons lumineux incidents sur le capteur d'image.

Selon un mode de réalisation, le déflecteur est un hologramme plein champ (gravé avec un unique faisceau de largeur de l'hologramme), qui forme un réseau de diffraction à pas constat ou variable) ou un hologramme pixelisé (ensemble de faisceaux pour graver pixel à pixel comme un réseau de diffraction individualisé pour chaque pixel, à pas constant ou variable).

Selon un mode de réalisation, le déflecteur forme également ledit moyen optique notamment avec une focale subcentimétrique et/ou inférieure à une diagonale du capteur d'image choisi matriciel, le capteur comprend au moins 100 pixels selon un axe du capteur d'image et même mieux au moins 1000 pixels.

La caméra est une caméra numérique de préférence haute résolution. Pour ce faire, la taille du pixel est de préférence de 20µm à 2µm et même de 10µm à 5 ou 2µm. Selon un mode de réalisation, l'élément diffractif est un hologramme pixelisé (enregistré pixel à pixel) comprenant une pluralité de deuxièmes pixels, l'hologramme pixels à pixels étant configuré pour faire converger une pluralité de rayons lumineux incidents d'angles différents des deuxième pixels vers les premiers pixels différents du capteur d'image afin de former une image sur le capteur d'image.

Selon un mode de réalisation, le moyen optique est un diaphragme (de préférence proche ou sur la face F2 posé ou collé, le diaphragme étant composé d'une pièce ou revêtement opaque imprimé sur l'intercalaire de feuilletage (poly(vinyl butyral PVB) ou film polymère entre deux feuillets d'intercalaire), et de préférence le vitrage comporte une cavité (air ou matériau bas indice de réfraction, notamment inférieur à celui de la feuille extérieure), notamment qui est une ouverture dans l'intercalaire de feuilletage, positionnée entre le déflecteur et le capteur d'image pour former un sténopé (« pinhole camera » en anglais) et le capteur d'image (CCD sur support flexible par exemple) est posé ou collé sur la face F3.

Selon un mode de réalisation, le moyen optique est entre la face F2 et F3 et est distant d'au plus 1mm du capteur d'image et de préférence d'au moins 0,15mm, de préférence sur la face F2 ou distant d'au plus 0,2mm ou 0,1mm de la face F2.

Selon un mode de réalisation, le capteur d'image est par exemple posé sur la face F3 ou collé par l'intercalaire de feuilletage ou un adhésif local double face, sensible à la pression etc.

Selon un mode de réalisation, la caméra et le déflecteur sont dans une zone périphérique du vitrage en particulier bordure supérieure (et même centrale, zone rétroviseur central notamment) du vitrage notamment dans une zone d'épargne d'un cadre périphérique de masquage (en particulier en contact et même sur la face F2).

Selon un mode de réalisation, la caméra est monochromatique (avec un canal) en particulier sans matrice de filtre (« color filter array » ou CFA en anglais, par exemple matrice de Bayer RGGB) devant le capteur d'image, ou encore est avec au moins deux canaux colorimétriques, ou même « RGB ». En particulier la caméra est monochromatique avec un premier canal à une première longueur d'onde LB1 et l'élément diffractif est un premier hologramme diffractant à ladite première longueur d'onde LB1, ou la caméra est multicanaux (notamment RGB) avec plusieurs longueurs d'onde (LB1, LB2 et même LB3, notamment rouge, vert, bleu) et l'élément diffractif est un hologramme multibandes diffractant auxdites plusieurs longueurs d'onde desdits canaux ou le vitrage comprend un autre ou plusieurs autre hologrammes (posés ou collés sur le premier hologramme de préférence côté face F2) pour diffracter auxdites longueurs d'ondes des canaux.

Selon un mode de réalisation, l'hologramme à la fois déflecteur et moyen optique peut gérer des distorsions induites par la réfraction en les prenant en compte dans la fonction optique. Le vitrage feuilleté notamment de véhicule routier (en particulier automobile : voiture et même camion) est de préférence bombé avec au moins un rayon de courbure typiquement entre 1 et 10m.

Les feuilles en verre, intérieure et extérieure, peuvent être à base de silice, sodocalcique, de préférence silicosodocalcique, voire aluminosilicate, ou encore borosilicate. En particulier, la feuille de verre intérieure peut être teintée et peut présenter une teneur pondérale en oxyde de fer total (exprimé sous la forme Fe2O3) d'au moins 0,4% et de préférence d'au plus 1,5 %.

La feuille de verre extérieure, notamment claire ou extraclaire, peut présenter de préférence une transmission lumineuse supérieure à 80%, notamment supérieure à 85% ou 90%. Dans le cas d'un parebrise notamment, la feuille de verre extérieure est de préférence claire et la feuille de verre intérieur teintée.

De préférence, l'intercalaire servant à lier les feuilles de verres peut comprendre une feuille polymère thermoplastique. L'intercalaire de feuilletage peut être au moins une feuille à base de PVB ou PU (souple) ou thermoplastique sans plastifiant (copolymère éthylène/acétate de vinyle (EVA), etc.), chaque feuille ayant par exemple une épaisseur entre 0,2 mm et 1,1 mm, notamment d'environ 0,38mm et 0,76mm. Classiquement, l'intercalaire (la ou les feuilles de PVB etc) s'étend sur au moins 80%, 90% de la surface du vitrage.

De préférence, toute couche, en feuillet, à base de PVB comprend de 70% à 75% de PVB, 25 à 30% de plastifiant et moins de 1% d'adjuvants. Il existe aussi des feuillets PVB avec peu ou sans plastifiant comme le film « MOWITAL LP BF » de la société KURARAY. Aussi, l'intercalaire de feuilletage peut être ou comprendre une feuille à base (en) poly(vinyl butyral) (PVB) contenant moins de 15% en poids de plastifiants, de préférence moins de 10% en poids et encore mieux moins de 5% en poids et en particulier sans plastifiant et notamment d'épaisseur d'au plus 0,15mm en particulier de 25 à 100µm, 40 à 70µm et même de 50µm, par exemple le produit Kuraray Mowital^{®}. En particulier le déflecteur (un premier hologramme de préférence) peut être collé à la face F2 par un tel PVB mince formant un adhésif local avec pas ou peu de plastifiant ou être en deux feuilles d'intercalaire notamment de PVB. En particulier le capteur d'image (le support de capteur d'image) peut être collé à la face F3 par un tel PVB mince formant un adhésif local avec pas ou peu de plastifiant.

L'intercalaire peut être acoustique en particulier comprendre ou être constitué d'un PVB acoustique (tricouche, quadricouche ...). Ainsi, l'intercalaire de feuilletage peut comprendre au moins une couche dite de milieu en matériau plastique viscoélastique aux propriétés d'amortissement vibro-acoustique notamment à base de polyvinylbutyral et de plastifiant, et l'intercalaire, et comprenant en outre deux couches externes en PVB standard, la couche de milieu étant entre les deux couches externes. On peut citer les PVB acoustiques décrits dans les demandes de brevet WO2012/025685, WO2013/175101, notamment teinté comme dans le WO2015079159.

Le vitrage peut posséder des propriétés d'isolation thermique, en particulier de réflexion du rayonnement infrarouge. Il peut à cet effet comprendre un revêtement de couches mince à faible émissivité, par exemple un revêtement comprenant une couche mince d'argent, déposé sur une feuille de polymère (polyester, poly(téréphtalate d'éthylène PET etc) interne encadrée par deux feuilles d'intercalaire (PVB etc) ou encore déposé sur la face F2 avec une épargne éventuelle dans la zone caméra ou encore sur la face F3. Ce revêtement peut être absent (retiré) dans la zone caméra.

L'intercalaire de feuilletage peut être monocouche, ou multicouches. On préfère pour les couches de l'intercalaire des films, par exemple des films autoportants. L'épaisseur de l'intercalaire de feuilletage est généralement comprise dans un domaine allant de 0,3 à 1,5 mm, notamment de 0,5 à 1 mm.

Les interfaces entre couches d'intercalaire de feuilletage, les feuillets par exemple, ne sont pas forcément discernables. L'intercalaire de feuilletage peut incorporer des éléments, non adhésifs au verre, tels que des films polymères fonctionnels ou des éléments électro optiques, des capteurs, de diverses étendues, sur tout ou partie du vitrage. Par exemple le vitrage comporte la séquence suivante en partant de la face F2 vers la face F3 premier PVB / film polymère non adhésif avec le verre/ deuxième PVB. Le défecteur peut être entre la face F2 et le premier PVB ou au sein du premier PVB, Et/ou Le capteur d'image peut être entre la face F3 et le deuxième PVB ou au sein du deuxième PVB.

On préfère également choisir un intercalaire de feuilletage le moins flou possible c'est-à-dire d'au plus 1,5% et même d'au plus 1%.

On peut imprimer une couche de masquage à base de PVB et de colorant (noir etc) sur un feuillet à base de butyral de polyvinyl (PVB). On peut ajouter des couches entre les faces F2 et F3 avec diverses fonctionnalités possibles et éventuellement adhésives.

Le vitrage peut comprendre entre les faces F2 et F3 une feuille polymère adhésive ou non, teinté ou non, éventuellement revêtu d'une couche fonctionnelle notamment électroconductrice (contrôle solaire, basse émissivité chauffante etc). Les polymères sont choisis parmi les polyoléfine (dont polyéthylène (PE), polypropylène (PP) ou polyisobutylène (P-IB)), le polychlorure de vinyle et ses dérivés (par exemple poly(dichlorure de vinyle) (PVDC)), les polymères styréniques (par exemple polystyrène (PS), acrylostyrène butadiène (ABS), styrène acrylonitrile (SAN)), les polyacryliques (dont polyacrylonitrile (PAN) et le poly(méthacrylate de méthyle) (PMMA) ), les polyester (dont poly(téréphtalate d'éthylène) (PET) et poly(téréphtalate de butylène) (PBT)), le polyoxyméthylène (POM), les polyamides (PA), les polymères fluorés tel que polychlorotrifluoroéthylène (PCTFE), les polycarbonates (PC), les polysulfones aromatiques dont polysulfone (PSU), les polyphénylène éther (PPE), les époxy (EP) seuls ou en mélange et/ou copolymère de plusieurs d'entre eux. On préfère le polyester et en particulier le PET.

Chaque film (notamment PET) a de préférence une épaisseur submillimétrique, par exemple de préférence d'au moins 30 µm ou 50 µm d'épaisseur.

L'épaisseur entre la face F1 et la face F4 est de préférence d'au plus 9mm ou 7mm, notamment pour un véhicule routier (automobile).

La première feuille de verre est de préférence en verre minéral éventuellement trempé notamment si elle est destinée à être la feuille extérieure et si la deuxième feuille est en verre organique. En particulier pour pare-brise de véhicule routier (notamment automobile, camion), la première feuille de verre (extérieure) est d'épaisseur de préférence d'au plus 2,5mm, même d'au plus 2,2mm - notamment 2,1mm, 1,9mm, 1,8mm, 1.7mm 1,6mm et 1,4mm- et même d'épaisseur d'au moins 0,7mm. La première feuille de verre extérieure présente de préférence une transmission lumineuse supérieure à 80%, notamment supérieure à 85% ou 90%.

En particulier pour pare-brise de véhicule routier (notamment automobile, camion), la deuxième feuille de verre peut être d'épaisseur d'au moins 0,7mm, éventuellement inférieure à celle de la première feuille de verre extérieure, même d'au plus 2,2mm - notamment 2,1mm, 1,9mm, 1,8mm, 1.7mm, 1,6mm et 1,4mm- ou même d'au plus 1,3mm ou d'au plus 1mm.

En particulier pour pare-brise de véhicule routier (notamment automobile), l'épaisseur totale des première et deuxième feuilles de verre est de préférence strictement inférieure à 5 ou 4mm, même à 3,7mm.

La zone caméra peut avoir des formes diverses (trapézoïdale, rectangulaire, avec bords éventuellement arrondis) et/ou le vitrage peut comprendre des éléments fonctionnels supplémentaires selon les utilisations en vis-à-vis de cette zone caméra. De manière générale, dans le cadre de l'invention, mais sans aucun caractère limitatif, la zone caméra du vitrage peut être une zone délimitée par au moins deux bords, de préférence trois bords ou même quatre bords (zone fermée). La zone caméra peut avoir une bande d'estompage sur sa périphérie extérieure. Le vitrage peut comprendre en regard de la zone caméra un élément chauffant par exemple sur une surface notamment sur face F2 et même entre ledit capteur d'image et ledit déflecteur, permettant d'éliminer toute buée ou givre susceptible de se former sur surface vitrée (F1 ou F2) et gêner l'acquisition de la caméra. L'élément chauffant peut être un réseau de pistes ou fils (quasi invisibles) éventuellement lié à l'intercalaire de feuilletage (PVB etc). on peut interposer entre capteur d'image et déflecteur (respectivement entre capteur d'image et élément optique ou entre élément optique et déflecteur si dissociés) tout élément transparent (éventuellement teinté) qui ne nuit pas à la qualité des images (film fonctionnel, notamment au sein de l'intercalaire de feuilletage etc).

Un aspect de l'invention concerne un véhicule avec un dispositif tel que décrit précédemment.

Le vitrage feuilleté peut être incliné d'un angle prédéfini par rapport à la normale à un point d'incidence sur la face F4, θ₁ allant notamment de 45° à 80° ou 70°pour un véhicule routier comme une voiture ou notamment d'au plus 5° pour un véhicule de transport routier, comme un bus ou un camion.

Le véhicule est par exemple routier, comme une automobile ou un camion ou un transport en commun ou encore un vitrage de véhicule ferroviaire. Le vitrage feuilleté est par exemple destiné à être un pare-brise (zone caméra en partie haute de préférence), une lunette arrière (zone caméra en partie haute de préférence) ou un vitrage latéral du véhicule (zone caméra en partie haute de préférence). La caméra sur un vitrage latéral peut être couplé à un écran de visualisation de la route (formant un rétroviseur virtuel gauche ou droit), par exemple écran à cristaux liquides ou 'OLED' qui est par exemple sur ou dans le parebrise.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.

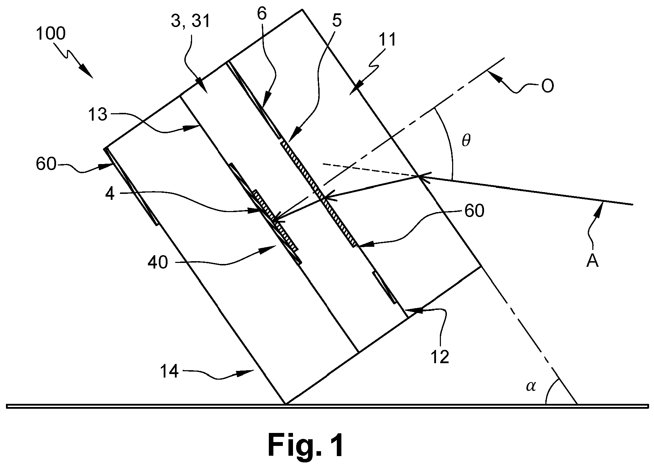

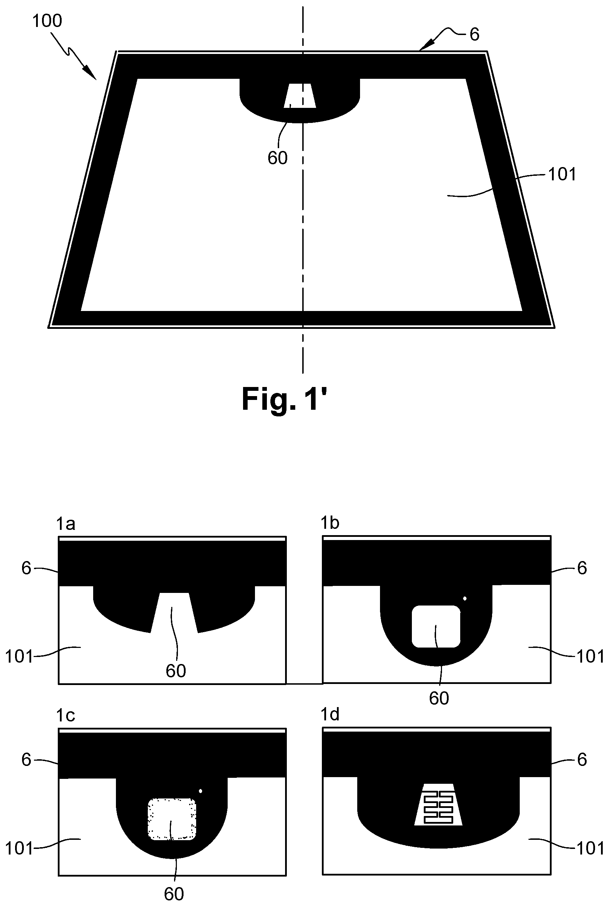

La [Fig. 1] est une vue schématique de coupe d'un vitrage feuilleté de véhicule intégrant une caméra dans un premier mode de réalisation de l'invention.
La [Fig. 1'] est une vue de face du vitrage feuilleté de véhicule selon l'invention dans ce premier mode de réalisation.
Les [Fig. 1a], [Fig. 1b], [Fig. 1c], [Fig. 1d] sont des vues de face alternatives du vitrage feuilleté de véhicule selon l'invention dans ce premier mode de réalisation.
La [Fig. 2] est une vue schématique de coupe d'un vitrage feuilleté de véhicule intégrant une caméra dans un deuxième mode de réalisation de l'invention
La [Fig. 3] est une vue schématique de coupe d'un vitrage feuilleté de véhicule intégrant une caméra dans un troisième mode de réalisation de l'invention.
La [Fig. 4] est une vue schématique de coupe d'un vitrage feuilleté de véhicule intégrant une caméra dans un quatrième mode de réalisation de l'invention.
La [Fig. 5] est une vue schématique de coupe d'un vitrage feuilleté de véhicule intégrant une caméra dans un cinquième mode de réalisation de l'invention.
La [Fig. 6] est une vue schématique de coupe d'un vitrage feuilleté de véhicule intégrant une caméra dans un sixième mode de réalisation de l'invention.
La [Fig. 7] est une représentation d'un vitrage feuilleté de véhicule selon l'invention intégrant une caméra dans un septième mode de réalisation de l'invention.

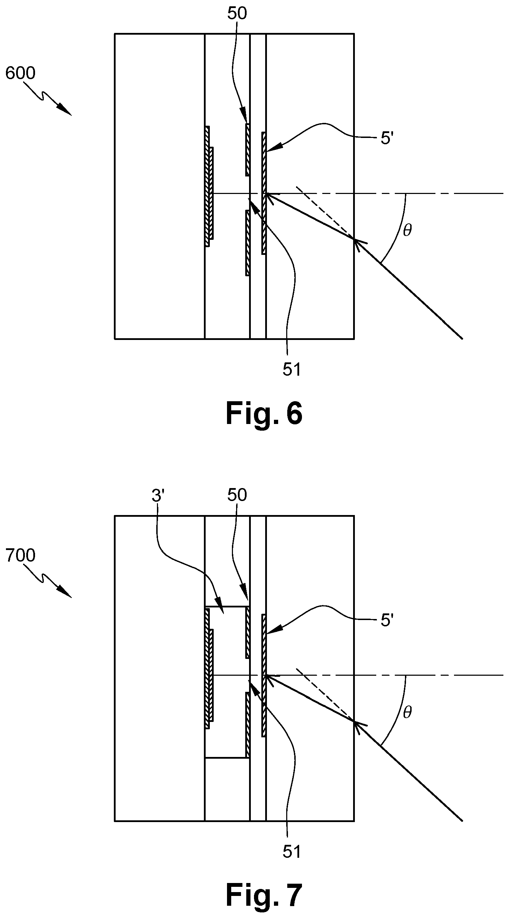

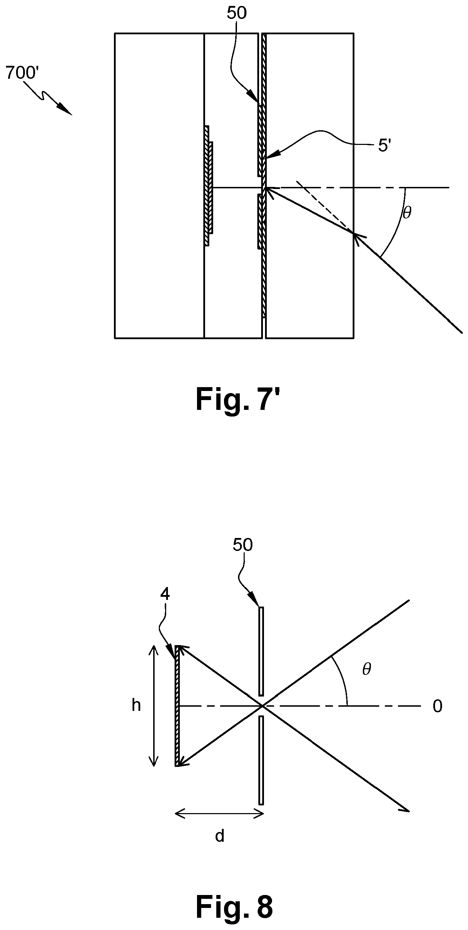

La [Fig. 7'] est une représentation d'un vitrage feuilleté de véhicule intégrant une caméra selon l'invention dans une variante du septième mode de réalisation de l'invention.
La [Fig. 8] est un schéma de référence illustrant le fonctionnement d'une caméra avec capteur d'image et diaphragme sans déflecteur.

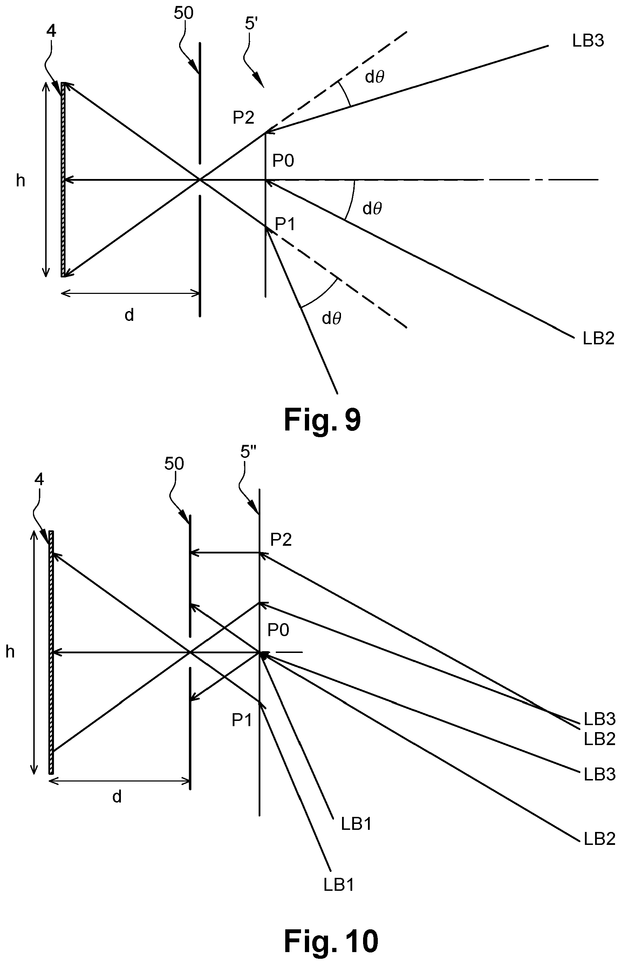

La [Fig. 9] est un schéma illustrant le fonctionnement d'une caméra avec capteur d'image et diaphragme et un hologramme déflecteur selon l'invention.
La [Fig. 10] est un schéma illustrant le fonctionnement d'une caméra avec capteur d'image et diaphragme et un hologramme déflecteur selon l'invention.

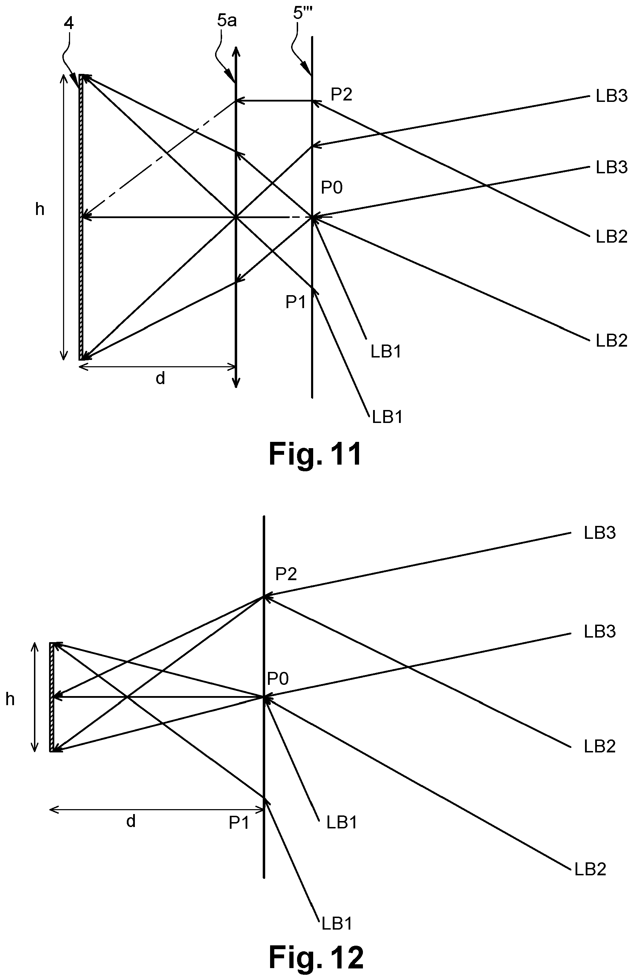

La [Fig. 11] est un schéma illustrant le fonctionnement d'une caméra avec capteur d'image et diaphragme et un premier hologramme déflecteur selon l'invention et un deuxième hologramme formant lentille convergente selon l'invention.
La [Fig. 12] est un schéma illustrant le fonctionnement d'une caméra avec capteur d'image et diaphragme et un hologramme à la fois déflecteur et lentille convergente selon l'invention.

### DESCRIPTION DETAILLEE

Sauf précision contraire, un même élément apparaissant sur des figures différentes présente une référence unique. Les vues ne sont pas à l'échelle. Dans la suite de la rédaction, une même référence sur différentes figures représente le même objet. La [Fig. 1] est une vue schématique de coupe d'un vitrage feuilleté de véhicule 100 dans un premier mode de réalisation de l'invention.

Dans ce premier mode de réalisation, le vitrage feuilleté 100 représenté à la Figure 1 comprend une feuille de verre dite feuille extérieure comprenant une première face principale 11 dite F1 destinée à être orientée vers l'extérieur du véhicule comprenant le vitrage feuilleté et une deuxième face principale 12 dite F2. La feuille extérieure est en verre minéral et est transparente. La feuille de verre extérieure a un indice de réfraction nᵥ à une longueur d'onde de référence λ₁ dans le visible. L'indice de réfraction nᵥ est de préférence supérieur ou égal à 1,5 et inférieur ou égal à 1,55.

Le vitrage feuilleté 100 comprend en outre une feuille de verre dite feuille intérieure comprenant une troisième face principale 13 dite F3 et une quatrième face principale 14 dite F4 destinée à être orientée vers l'habitacle du véhicule comprenant le vitrage feuilleté 100. La feuille intérieure est en verre minéral et est transparente. La feuille de verre intérieure a un indice de réfraction nᵥ à λ₁.

Les feuilles extérieure et intérieure du vitrage feuilleté 100 sont liées par un intercalaire de feuilletage en matière polymère 3, ici un monofeuillet 31.

L'intercalaire est ici une feuille 31 à base de PVB ou PU (souple) copolymère éthylène/acétate de vinyle (EVA), par exemple une épaisseur entre 0,2 mm et 1,1mm, notamment 0,38 et 0,76mm environ. L'intercalaire peut être acoustique.

Le vitrage feuilleté 100 intègre une caméra, la caméra comprenant un capteur d'image 4 et un moyen optique qui a une fonction d'imagerie optique détaillé par la suite. La caméra a un axe optique O passant par un pixel central du capteur d'image 4 de la caméra.

Le vitrage feuilleté 100 est par exemple un pare-brise 100, comme représenté en vue de face à la Figure 1'. Un tel pare-brise 100 comprend alors le vitrage feuilleté 100, une zone centrale transparente 101, une zone de masquage opaque 6 sous forme d'un cadre périphérique et un orifice 60 ou épargne 60 dans la zone de masquage opaque 6, formant une zone caméra 60. La zone de masquage opaque 6 permet notamment de cacher la jonction entre le pare-brise 100 et le châssis du véhicule comprenant le pare-brise ou destiné à comprendre le pare-brise. La caméra est donc comprise dans l'orifice 60 de la zone de masquage 6. Dans un tel cas, le déflecteur 5 est compris dans la zone caméra 60 par exemple, ayant une forme trapézoïdale. La caméra et le déflecteur 5 sont dans une zone périphérique du vitrage feuilleté 100 et de préférence comme ici dans une bordure longitudinale supérieure du vitrage feuilleté 100. On entend par « bordure supérieure » une zone située en bord de vitrage feuilleté 100 dans sa partie haute lorsque le vitrage feuilleté 100 est installé dans un véhicule.

La zone caméra 60 peut avoir des formes diverses et/ou le vitrage peut comprendre des éléments fonctionnels supplémentaires selon les utilisations en vis-à-vis de cette zone caméra 60. Des exemples de zones caméra 60 sont représentés sur les figures 1a à 1d. La figure 1a représente une zone caméra 60 trapézoïdale avec un bord inférieur ouvert. La figure 1b représente une zone caméra 60, sous la forme rectangulaire à bords arrondis avec une optionnelle autre zone transparente, plus petite, sous la forme d'un cercle. La partie ayant la forme de cercle peut par exemple servir à l'installation d'un dispositif complémentaire tel qu'un capteur de pluie ou de luminosité extérieure. La figure 1c est une variante de la zone de la figure 1b dans laquelle la partie rectangulaire à bords arrondis comprend en outre une bande d'estompage sur sa périphérie extérieure. La figure 1d représente une zone caméra comprenant un élément chauffant, permettant d'éliminer toute buée ou givre susceptible de se former sur une surface vitrée (face F1, face F2) et gêner l'acquisition de la caméra.

Le capteur d'image 4 comportant un support 40 et une partie fonctionnelle 4 est positionné entre la face F2 de la feuille extérieure et la face F3 de la feuille intérieure. Le capteur d'image 4 est posé ou collé à la face F3. Le capteur d'image 4, aussi appelé capteur photographique, est configuré pour convertir des rayons lumineux en signaux électriques. Le capteur d'image 4 est un capteur de type CCD ou CMOS d'épaisseur subcentimétrique.

Le capteur d'image 4 est matriciel rectangulaire. Il comprend par exemple plus de 2000 ou 3000 pixels. Les pixels sont par exemple de 4µm. Le capteur d'image 4 comprend au moins un pixel central, l'axe optique O de la caméra passant par ledit pixel central.

Le capteur d'image 4 est sur support flexible 40, préférentiellement un CCD sur support flexible. Le capteur d'image CCD peut être relié à un processeur distant via au moins un circuit imprimé flexible compris dans un couche de l'intercalaire.

Le vitrage feuilleté comprend, entre la face F1 et le capteur d'image 4, un déflecteur 5 de préférence distant du capteur d'image. Le déflecteur 5 est un élément diffractif, préférentiellement un hologramme en transmission.

Le déflecteur 5 est configuré pour défléchir un rayon lumineux A extérieur arrivant sur la face F1 du vitrage feuilleté 100 avec un angle d'incidence θ non nul par rapport à la normale à la feuille extérieure et ainsi le rediriger vers le capteur d'image, en particulier le rediriger suivant l'axe optique O sur le pixel central. L'axe optique O est préférentiellement confondu avec la normale à la feuille extérieure.

Ainsi, dans le mode de réalisation représenté à la Figure 1, le rayon lumineux A a un angle d'incidence θ avec la normale à la feuille extérieure du vitrage feuilleté 100 et cet angle θ est compris dans la gamme θ₁.

Lorsque le vitrage feuilleté 100 est incliné d'un angle α compris entre 20 et 45 degrés par rapport à une ligne de référence horizontale, comme représenté à la Figure 1, par exemple par rapport à la route sur laquelle le véhicule comprenant ou destiné à comprendre le vitrage feuilleté 100 circule, la gamme d'angle θ₁ est choisie telle que les rayons ayant une orientation plus basse que la normale à la feuille extérieure du vitrage feuilleté 100 soient défléchis sur le capteur d'image 4, afin de capturer des images au niveau de la route plutôt qu'au niveau du ciel.

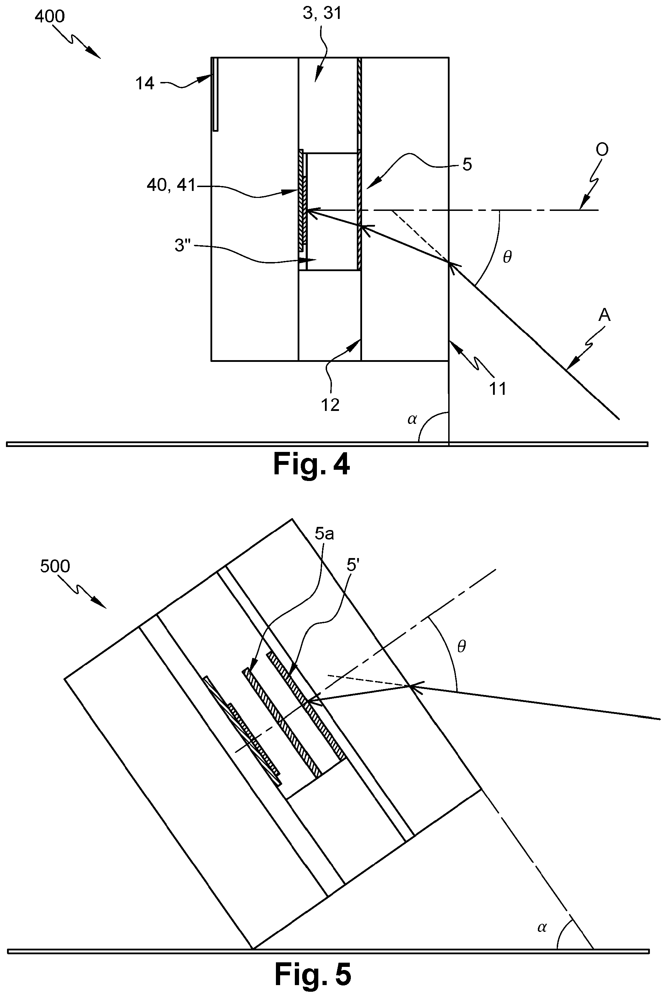

Lorsque le vitrage feuilleté 100 est incliné d'un angle α de 90 degrés (±0,5 degrés) par rapport à une ligne de référence horizontale, comme représenté à la Figure 4, par exemple par rapport à la route sur laquelle le véhicule comprenant ou destiné à comprendre le vitrage feuilleté 100 circule, la gamme d'angle θ₁ est choisie telle que les rayons ayant une orientation plus basse que la normale à la feuille extérieure du vitrage feuilleté 100 soient défléchis sur le capteur d'image 4, afin de capturer des images d'objets plus proches du véhicule que sans déflecteur 5, c'est-à-dire une gamme d'angle θ₁ comprise dans l'intervalle ]0 ; 5] degrés.

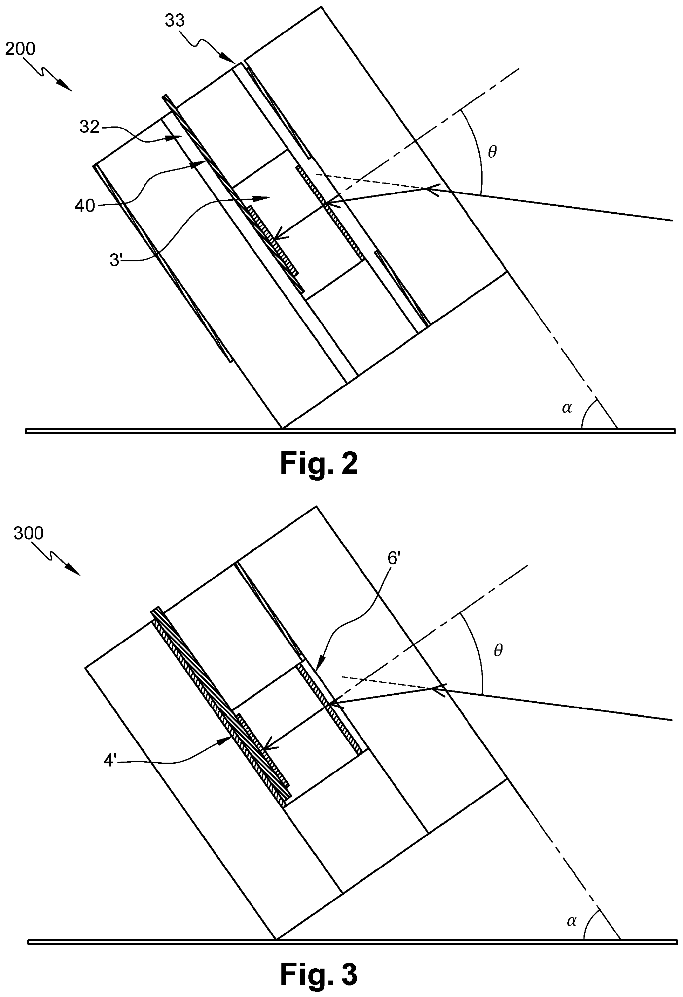

La [Fig. 2] est une vue schématique de coupe d'un vitrage feuilleté de véhicule 200 dans un deuxième mode de réalisation de l'invention.

Il diffère du vitrage 100 en ce qu'il comprend un orifice 3' dans la couche intercalaire de PVB. Ainsi, le capteur d'image 4 et le déflecteur 5 ne sont pas séparés par une couche de PVB 3, en ce que le support 40 du capteur d'image 4 dépasse du vitrage pour faciliter des connexions par exemple et en ce que deux feuillets de PVB 31 et 32 sont utilisés respectivement entre le capteur d'image 4 et la feuille intérieure et entre le déflecteur 5 et la feuille extérieure.

Dans ce mode de réalisation, illustré sur la figure 2, l'espace intermédiaire 3' entre le déflecteur 5 et le capteur d'image 4 est un espace creux. Dans un autre mode de réalisation représenté à la Figure 4, l'espace intermédiaire 3' est réalisé dans un matériau dont l'indice de réfraction est inférieur à l'indice de réfraction de la feuille de verre extérieure du vitrage feuilleté 100. L'espace intermédiaire 3' peut ainsi être rempli d'un matériau ou peut rester un espace creux. Pour créer l'espace intermédiaire 3' creux et maintenir le capteur d'image 4 et le déflecteur 5, l'intercalaire comprend deux feuillets 32 et 33, préférentiellement en PVB. Le premier feuillet 32 est attaché, collé ou posé sur la feuille intérieure, préférentiellement sur la face F3 13. Le capteur d'image 4 et son support 40 reposent, sont attachés ou collés à ce feuillet 32. Le deuxième feuillet 33 est attaché, collé ou posé sur la feuille extérieure, préférentiellement sur la face F2 12. Le déflecteur 4 est alors attaché, collé ou posé sur le feuillet 33.

La [Fig. 3] est une vue schématique de coupe d'un vitrage feuilleté de véhicule 300 dans un troisième mode de réalisation de l'invention.

Il diffère du vitrage 100 en ce que qu'il comprend une pluralité d'adhésifs locaux 4' et 6'. L'adhésif local 4' permet de maintenir le capteur d'image 4 et/ou le support 40 à la feuille intérieure, préférentiellement à la face F3. L'adhésif local 6' permet de maintenir le déflecteur 5 à la feuille extérieure, préférentiellement à la face F2.

La [Fig. 4] est une vue schématique de coupe d'un vitrage feuilleté de véhicule 400 dans un quatrième mode de réalisation de l'invention.

Il diffère du vitrage 100 en ce qu'il est incliné d'un angle de 90 degrés plus ou moins 5 degrés par rapport au sol. Préférentiellement, le vitrage incliné de 90 degrés plus ou moins 5 degrés est un vitrage de camion ou de bus, c'est-à-dire d'un véhicule routier ayant des vitrages verticaux ou sensiblement verticaux. Le vitrage 400 diffère en outre du vitrage 100 en ce que le capteur d'image 4 et le déflecteur 5 ne sont pas séparés par une couche intercalaire de PVB 3 mais par un matériau bas indice de réfraction 3" qui peut être adhésif.

La [Fig. 5] est une vue schématique de coupe d'un vitrage feuilleté de véhicule 500 dans un cinquième mode de réalisation de l'invention.

Il diffère du vitrage 100 en ce que le déflecteur 5 est un hologramme et en ce qu'un lentille 5a est en outre comprise dans le PVB. La lentille 5a est un moyen optique de la caméra. Préférentiellement, le moyen optique est positionné entre la face F2 de la feuille extérieure et le capteur d'image 4 et est suffisamment distant du capteur d'image 4, à une distance que l'on appelle typiquement distance focale g du moyen optique.

Un hologramme est obtenu par exposition d'un support photosensible à l'interférence entre un faisceau de référence et un faisceau d'objet à reconstruire.

Lorsque la profondeur de cet hologramme ne peut être négligée, ce qui se produit lorsque la profondeur de l'hologramme est de l'ordre ou supérieure au pas des franges de l'hologramme, l'hologramme est appelé hologramme de volume. Dans ce cas, il possède une autre propriété appelée condition de Bragg qui stipule que seul un ordre de diffraction est diffracté efficacement, pour une classe d'angles et de longueurs d'onde proches de la configuration de gravure. En particulier, la composante « parasite » est souvent faible ou peut même disparaître en raison de cette condition de Bragg. Une condition de Bragg relâchée conduit à des hologrammes irisés puisque la lumière parasite à large bande peut également se diffracter sur l'hologramme.

En pratique, les hologrammes utilisés dans les applications d'affichage transparent ou de détection dans l'état de l'art sont des hologrammes de volume avec une condition de Bragg assez stricte afin d'être aussi transparents que possible. Cela rend ces hologrammes particulièrement sensibles à la distorsion optique dans les laminés automobiles. La présente invention résout ce problème de deux manières. Selon l'application, une condition de Bragg stricte n'est pas toujours nécessaire car la fonction de déflexion peut être cachée de la vision du conducteur par une impression noire. Si des conditions de Bragg strictes sont nécessaires, l'hologramme peut être placé près du capteur d'image de manière à intégrer moins de défauts que les applications d'affichage et de détection de l'état de l'art.

L'hologramme selon l'invention est par exemple un hologramme en volume, positionné entre la face F2 et le capteur d'image 4, ici posé ou collé sur la face F2. L'hologramme 5' est obtenu à partir de l'enregistrement du champ transmis par une matrice de micro-lentilles ou par un objectif de caméra. L'hologramme 11 en volume est réalisé de préférence dans un matériau photopolymère, notamment sous forme d'un film collé ou posé sur la face F2 ou un revêtement sur la face F2. Alternativement, l'hologramme 5' en volume peut être placé entre deux couches de l'intercalaire.

Alternativement l'hologramme est un hologramme gravé dans la feuille de verre extérieure du vitrage feuilleté 100, préférentiellement comme ici sur la face F2 de la feuille de verre extérieure. La gravure de l'hologramme directement dans le verre est généralement préférée car elle offre une bonne protection contre les dommages tels que les rayures d'essuie-glace. Dans cette alternative, les angles arrivant sur l'hologramme seront régis par la loi de réfraction *nᵥ* sin *θ_{g}* = sin *θₐ* Où θg et θa sont respectivement l'angle réfracté dans le verre et l'angle entrant dans l'air. Pour un champ de vision de ±20° autour de 0°, les angles incidents sur un pare-brise incliné de 60° par rapport à la verticale seront compris entre 40 et 80°. Dans ce cas, les angles arrivant sur l'hologramme 5' seront compris entre 25 et 40°, avec une cartographie fortement non linéaire en raison du terme sinus de la loi de Snell (c'est-à-dire des distorsions de l'image).

Dans ce mode de réalisation, l'hologramme 5' a une unique première fonction optique. Une première fonction optique de l'hologramme 5' est la fonction de déflection. La fonction de déflection de l'hologramme 12 est choisie telle qu'une portion des rayons lumineux, dans une gamme θ₁, atteint l'hologramme et est défléchie vers le capteur d'image 4. La gamme θ₁ est une gamme d'angles d'incidence prédéfinie pour des rayons extérieurs au véhicule arrivant sur la feuille extérieure du vitrage feuilleté 100 et qui sont destinés à être défléchis vers le capteur d'image 4. Préférentiellement, pour un véhicule terrestre tel qu'une voiture, la gamme θ₁ est définie par rapport à la normale à la feuille extérieure, et comprend des angles entre 45 degrés et 70 degrés par rapport à la normale à la feuille extérieure, et donc par rapport au vitrage feuilleté 100. Préférentiellement, pour un véhicule de transport (camion, bus), la gamme θ₁ est définie par rapport à la normale à la feuille extérieure, et comprend des angles d'au plus 5° degrés par rapport à la normale à la feuille extérieure, et donc par rapport au vitrage feuilleté 100.

Dans un mode de réalisation compatible avec tous les modes de réalisation, pour réaliser la fonction de déflexion, deux ou même trois hologrammes ou plus peuvent être superposés, chaque hologramme répondant à différentes longueurs d'onde, afin de fournir des images RGB par exemple, ou afin d'augmenter le champ de vision. La condition de Bragg peut également être légèrement relâchée afin d'augmenter la profondeur de champ du système optique, ou plusieurs hologrammes avec des conditions de Bragg strictes enregistrées pour concentrer les rayons incidents sur différents plans peuvent être superposés.

Dans ce mode de réalisation, le moyen optique est une lentille convergente 5a, préférentiellement un deuxième hologramme 5a formant lentille convergente, notamment configurée pour faire converger les rayons lumineux incidents sur le capteur d'image 4. La lentille 5a peut être sous forme de film posé ou collé sur le déflecteur 5', par colle optique, bande adhésive etc. Dans ce mode de réalisation, le déflecteur 5' est un hologramme 4' qui n'a que la fonction optique de déflexion, car la fonction optique de convergence est réalisée par la lentille convergente 5a. Lorsque l'hologramme supplémentaire forme lentille convergente 5a, il est un hologramme en volume positionné entre le déflecteur 5 et le capteur d'image 4, et est notamment configuré pour faire converger les rayons lumineux incidents sur le capteur d'image 4.

La [Fig. 11] est un schéma représentant le trajet de rayons incidents en présence d'un hologramme à déflexion uniforme 5"', c'est-à-dire à pas constant, et d'une lentille convergente 5a, préférentiellement un autre hologramme. Dans ce mode de réalisation, tous les rayons incidents sont défléchis de la même manière, l'hologramme réalisant la fonction de déflexion étant un hologramme à pas constant. La lentille 5a réalise ensuite la fonction de faire converger les rayons défléchis sur le capteur d'image 4.

La [Fig. 6] est une vue schématique de coupe d'un vitrage feuilleté de véhicule 600 dans un sixième mode de réalisation de l'invention.

Il diffère du vitrage 100 en ce qu'il comprend en outre un sténopé formé par un moyen opaque 50 et une ouverture 51 dans le moyen opaque 50.

La Figure 6 montre une représentation schématique d'un mode de réalisation de l'invention dans lequel le moyen optique est un diaphragme. Dans ce mode de réalisation, le déflecteur est un hologramme 5' qui réalise uniquement une fonction de déflexion des rayons luminaux extérieurs incidents.

Le diaphragme 51 est accompagné d'une simple ouverture dans l'intercalaire I, formant ainsi une caméra dite « sténopé », ou « pinhole » en anglais. Dans un tel cas, la lumière provenant d'angles différents devant l'ouverture 51 crée des images à différentes positions sur le capteur d'image derrière l'ouverture 51. Un avantage est donc l'obtention d'une caméra à sténopé économique qui permet une captation d'images économique sans optique supplémentaire. Les capacités d'imagerie des caméras à sténopé sont suffisantes pour détecter des sources lumineuses puissantes comme le soleil ou les feux de signalisation, mais peuvent être trop faibles pour certaines applications, la sécurité par exemple. En particulier, la quantité de lumière collectée est faible en raison du diaphragme fortement fermé.

Le diaphragme 51 peut être une ouverture réalisée dans une pièce 50 ou dans un revêtement opaque 50 imprimé sur l'intercalaire de feuilletage PVB ou sur un film polymère 50 tel que PET entre deux feuillets d'intercalaire tel que PVB.

La [Fig. 7] est une représentation d'un vitrage feuilleté de véhicule 700 selon l'invention dans un septième mode de réalisation de l'invention

Il diffère du vitrage 100 en ce qu'il comprend en outre un sténopé formé par un moyen opaque 50 et une ouverture 51 dans le moyen opaque 50 et une ouverture 3' dans la couche intercalaire 3 de PVB.

En choisissant la distance de l'ouverture 51 par rapport capteur d'image 4 et en choisissant l'épaisseur d'une éventuelle couche intermédiaire 14 et/ou en choisissant un matériau pour l'espace intermédiaire 14, il est possible de sélectionner de manière appropriée la gamme d'angles incidents imagés sur le capteur d'image 4. Grâce à la taille de l'ouverture 51, par exemple 0,5 mm ou moins, en particulier 0,1 mm ou moins, une résolution appropriée peut être sélectionnée entre l'intensité lumineuse nécessaire et la résolution par rapport à la distance disponible entre l'ouverture 51 et le capteur d'image 4 (et sa taille).

Préférentiellement, la distance entre le capteur d'image 4 et l'ouverture 51 est d'au plus 1 mm et de préférence d'au moins 0,15 mm. Le diaphragme 51 est de préférence collé à la face F2 de la feuille de verre extérieure ou est distant de la face F2 d'au plus 0,1 mm.

La [Fig. 7'] est une représentation d'un vitrage feuilleté de véhicule 700' selon l'invention dans un septième mode de réalisation de l'invention.

Il diffère du vitrage 700 en ce que le sténopé est formé sur le déflecteur 5', au contraire du vitrage 700 dans lequel le sténopé est séparé du déflecteur 5' par une couche intercalaire.

Dans le mode de réalisation comprenant un diaphragme 51, à cause de la réfraction dans le verre de la feuille de verre extérieure du vitrage feuilleté 100, aucun rayon lumineux incident ayant un angle θ supérieur à 41 degrés ne peut parvenir au capteur d'image 4. Cela est notamment représenté à la [Fig. 8].

A la figure 8, le capteur d'image a une dimension, par exemple une hauteur, nommée h. une distance d sépare le capteur d'image 4 du diaphragme 51. Avec la relation h = 2*d* tan *θ*, et en prenant comme exemple une distance d de 380 µm entre le diaphragme 51 et le capteur d'image 4, ce qui correspond par exemple à l'épaisseur d'une feuille de PVB tel que représenté à la Figure 6, seule une surface de 660 µm peut être utilisée pour capter les rayons lumineux par le capteur d'image 4. Avec un exemple de pixels de dimension 4,2 µm par pixel, on obtient au maximum un capteur d'image de 160x160 pixels.

La résolution angulaire maximale d'un sténopé feuilleté dans un vitrage feuilleté 100 est donc de 180/160 = 1,125° par pixel.

Un sténopé ne peut donc servir qu'à voir des objets très proche du véhicule lorsque le vitrage feuilleté 100 est compris dans un véhicule. Par exemple, à 1 m, la résolution spatiale est de 2 cm, ou encore de 20 cm à 10 m. Il est donc possible par exemple de détecter un piéton à 1 m et une voiture à 10 m.

La [Fig. 9] montre une représentation schématique du mode de réalisation de l'invention comprenant un hologramme déflecteur 5' à déflexion uniforme et une ouverture 51.

Lorsque l'hologramme déflecteur 5' est à déflexion uniforme, il est formé d'un réseau de diffraction à pas constant. Ainsi, une même déflexion est réalisée sur toute la surface de l'hologramme, par exemple aux points P0, P1 et P2. La relation entre les angles incidents *θᵢ* et les angles réfractés *θ_{d}* est ainsi dépendante de la longueur d'onde λ et est uniforme sur toute la surface, suivant la relation sin *θᵢ* - $sin {θ}_{d} = \frac{λ}{p}$.

Dans un mode de réalisation préférentiel représenté aux Figures 1, 2, 3 et 4, le déflecteur 5 est un hologramme et réalise en outre une fonction optique pour la caméra de lentille convergente. Ainsi, il est possible de se passer de l'ouverture 51. Utiliser un hologramme 5' permet donc de raccourcir la focale du système d'imagerie et donc d'agrandir la taille du capteur d'image 4.

L'hologramme réalisant la fonction de convergence (qu'il soit l'hologramme 5' ou un hologramme supplémentaire 5a) a par exemple une focale subcentimétrique et/ou inférieure à une diagonale du capteur d'image 4. La Figure 12 montre une représentation schématique de ce mode de réalisation dans lequel l'hologramme réalise et la fonction de déflexion des rayons lumineux extérieurs incidents et la fonction optique de la caméra.

Dans ce mode de réalisation, le déflecteur 5 peut être un hologramme plein champ, c'est-à-dire gravé avec un unique faisceau de largeur de l'hologramme, qui forme un réseau de diffraction à pas constat ou variable.

L'hologramme 5 peut aussi être un hologramme pixelisé. Si les fonctions optiques nécessaires à l'un ou l'autre des modes de réalisation précédents ne peuvent être obtenues, des approches d'enregistrement par pixel peuvent ainsi être utilisées pour graver l'hologramme pixel par pixel de quelques centaines de µm de large. De telles approches pixel par pixel consistent à déplacer une tête d'écriture contenant un modulateur de lumière (comme un SLM par exemple) dans le milieu photosensible. A chaque position de la tête d'écriture, le modulateur de lumière est contrôlé par un ordinateur afin de générer une onde plane se propageant dans la direction souhaitée et pouvant interférer localement avec le faisceau de référence. La direction souhaitée à chaque pixel est calculée grâce à des hologrammes générés par ordinateur. L'approche par pixel est plus longue que l'approche plein champ en raison de la nécessité de balayer le support photosensible, mais elle présente plusieurs avantages. Notamment, elle permet de concevoir des fonctions optiques qui n'existent pas autrement. Les ondes du plan de référence et de l'objet sont généralement focalisées à l'échelle du pixel, ce qui signifie qu'une irradiation potentiellement plus élevée peut être atteinte (modulation d'indice potentiellement plus élevée, résistance aux vibrations). De plus, une fois qu'un hologramme à l'échelle du pixel est obtenu, il peut être répliqué grâce à des techniques de réplication dites « master-replication ». Dans ce cas, un support photosensible transparent est mis en contact avec un hologramme et le faisceau de référence est balayé à travers la pile de sorte que l'hologramme puisse être facilement répliqué sur le support photosensible vierge.

Lorsque le déflecteur 5 est un hologramme pixelisé, celui-ci comprend une pluralité de deuxièmes pixels, l'hologramme 5 pixelisé étant configuré pour faire converger une pluralité de rayons lumineux incidents d'angles différents des deuxième pixels vers les premiers pixels différents du capteur d'image 4 afin de former une image sur le capteur d'image. Il est ainsi possible de faire correspondre des rayons incidents sur certains pixels de l'hologramme 5 à des pixels particuliers du capteur d'image 4.

La [Fig. 10] est un schéma illustrant le fonctionnement d'une caméra avec capteur d'image et diaphragme et un hologramme déflecteur selon l'invention. Dans la Figure 10, l'hologramme déflecteur 5" est formé d'un réseau de diffraction à pas qui varie sur la surface de l'hologramme 5", qu'il soit un hologramme plein champ ou un hologramme pixelisé. A la Figure 10, l'angle de déflexion des rayons incidents est différent en fonction de l'angle d'incidence. Cela est notamment visible au point P0, auquel trois rayons incidents sont défléchis différemment en fonction de leur angle d'incidence. Cela permet d'avoir un champ de vision optimal.

## Revendications

1. Dispositif comportant un vitrage feuilleté (100) de véhicule, notamment routier ou ferroviaire, en particulier pare-brise, lunette arrière, vitrage latéral comprenant :
- Une feuille de verre dite feuille extérieure comprenant une première face principale (11) dite F1 et une deuxième face principale (12) dite F2,
- Une feuille de verre dite feuille intérieure comprenant une troisième face principale (13) dite F3 et une quatrième face principale (14) dite F4,
- Un intercalaire (3) de feuilletage en matière polymère entre la face F2 (12) et la face F3 (13),
- une zone transparente (60) dite zone caméra
le dispositif comportant en regard de la zone caméra (60) du vitrage feuilleté (100), une caméra, avec un axe optique O, comportant :
- Un capteur d'image (4), un moyen optique ayant une fonction d'imagerie optique, **Caractérisé en ce que** :
o le capteur d'image (4) est positionné entre la face F2 (12) et F3 (13) apte à recevoir des rayons lumineux traversant la feuille extérieure dans la zone caméra (60), le capteur d'image (4) comportant une pluralité de premiers pixels dont un pixel central, l'axe optique O passant par ledit pixel central,
∘ entre la face F1 (11) et le capteur d'image (4), le moyen optique ayant une fonction d'imagerie optique, de préférence entre la face F2 (12) et le capteur d'image,
∘ Le vitrage feuilleté (100) comprend entre la face F1 (11) et le capteur d'image, un déflecteur (5), le déflecteur (5) étant un élément diffractif, configuré pour défléchir un rayon lumineux extérieur A arrivant sur la face F1 (11) du vitrage feuilleté (100) avec un angle d'incidence non nul par rapport à la normale à la feuille extérieure et le rediriger suivant l'axe optique O sur le pixel central.

2. Dispositif selon la revendication 1 selon lequel le rayon lumineux A a un angle d'incidence θ avec la normale à la feuille extérieure du vitrage feuilleté (100) et cet angle θ est égal à au plus θ1 correspondant à un angle de la face F1 (11) avec la normale au vitrage dans la zone caméra (60) en position montée.

3. Dispositif selon l'une des revendications précédentes selon lequel le moyen optique et/ou le déflecteur (5) sont côté face F2 (12), formé sur la face F2 (12) ou entre la face F2 (12) et le capteur d'image (4).

4. Dispositif selon l'une des revendications précédentes selon lequel le déflecteur (5) est à déflexion variable angulairement, variant en fonction de l'angle d'incidence sur le déflecteur (5).

5. Dispositif selon l'une des revendications précédentes selon lequel le déflecteur (5) est un premier hologramme (5') gravé de préférence sur la face F2 (12) ou le déflecteur (5) est un premier hologramme (5') en volume, de préférence posé ou collé sur la face F2 (12).

6. Dispositif selon la revendication précédente selon lequel l'hologramme (5') est en volume et est réalisé dans un matériau photopolymère, notamment sous forme d'un film collé ou posé sur la face F2 (12) ou un revêtement sur la face F2 (12).

7. Dispositif selon l'une des revendications précédentes selon lequel le déflecteur (5) est un hologramme (5') plein champ ou un hologramme (5') pixelisé.

8. Dispositif selon l'une des revendications précédentes dans lequel le moyen optique est une lentille convergente (5a).

9. Dispositif selon l'une des revendications précédentes selon lequel le moyen optique est un hologramme (5') formant lentille convergente, positionné entre le déflecteur (5) et le capteur d'image (4).

10. Dispositif selon l'une des revendications 1 à 8 selon lequel le déflecteur (5) forme également ledit moyen optique qui est une lentille convergente notamment avec une focale subcentimétrique et/ou inférieure à une diagonale du capteur d'image (4) choisi matriciel.

11. Dispositif selon l'une des revendications précédentes selon lequel l'élément diffractif (5) est un hologramme pixelisé comprenant une pluralité de deuxièmes pixels, l'hologramme pixelisé étant configuré pour faire converger une pluralité de rayons lumineux incidents d'angles différents des deuxième pixels vers les premiers pixels différents du capteur d'image (4) afin de former une image sur le capteur d'image (4).

12. Dispositif selon l'une des revendications 1 à 7 selon lequel le moyen optique est un diaphragme (51), et de préférence le vitrage comporte une cavité, notamment une ouverture (3') dans l'intercalaire de feuilletage (3), positionnée entre le déflecteur (5) et le capteur d'image (4) pour former un sténopé et le capteur d'image (4) est posé ou collé sur la face F3 (13).

13. Dispositif selon l'une des revendications précédentes selon lequel le moyen optique est entre la face F2 (12) et F3 (13) est distant d'au plus 1mm du capteur d'image (4) et de préférence d'au moins 0,15mm, de préférence sur la face F2 (12) ou distant d'au plus 0,1mm de la face F2 (12).

14. Dispositif selon l'une des revendications précédentes selon lequel la zone caméra (60) est une zone périphérique du vitrage en particulier bordure supérieure du vitrage notamment qui est une zone d'épargne d'un cadre périphérique de masquage, en particulier en contact et même sur la face F2 (12).

15. Dispositif selon l'une des revendications précédentes selon lequel la caméra est monochromatique avec un premier canal à une première longueur d'onde LB1 et l'élément diffractif est un premier hologramme diffractant à ladite première longueur d'onde LB1 ou en ce que la caméra est multicanaux avec plusieurs longueurs d'onde, et l'élément diffractif est un hologramme multibandes diffractant auxdites plusieurs longueurs d'onde desdits canaux ou le vitrage comprend un autre hologramme ou plusieurs autre hologrammes pour diffracter auxdites longueurs d'ondes des canaux.

16. Véhicule comprenant le dispositif selon l'une des revendications précédentes dans lequel le vitrage feuilleté (100) est incliné d'un angle prédéfini θ1 par rapport à la normale à un point d'incidence sur la face F4, θ₁ allant de préférence de 45 à 70° pour un véhicule routier comme une voiture ou de préférence d'au plus 5° pour un véhicule de transport routier, comme un bus ou un camion.

## Patentansprüche

1. Vorrichtung, umfassend eine Verbundverglasung (100) eines Fahrzeugs, insbesondere eines Straßen- oder Schienenfahrzeugs, im Besonderen Windschutzscheibe, Heckscheibe, Seitenverglasung, umfassend:
- eine Glasscheibe, die äußere Scheibe, umfassend eine erste Hauptfläche (11), F1, und eine zweite Hauptfläche (12), F2,
- eine Glasscheibe, die innere Scheibe, umfassend eine dritte Hauptfläche (13), F3, und eine vierte Hauptfläche (14), F4,
- eine Verbundzwischenlage (3) aus Polymermaterial zwischen der Fläche F2 (12) und der Fläche F3 (13),
- einen transparenten Bereich (60), den Kamerabereich
die Vorrichtung, umfassend gegenüber dem Kamerabereich (60) der Verbundverglasung (100) eine Kamera mit einer optischen Achse O, umfassend:
- einen Bildsensor (4), ein optisches Mittel mit einer optischen Abbildungsfunktion, **dadurch gekennzeichnet, dass**:
∘ der Bildsensor (4) zwischen der Fläche F2 (12) und F3 (13) positioniert und geeignet ist, um Lichtstrahlen zu empfangen, welche die äußere Scheibe in dem Kamerabereich (60) durchdringen, wobei der Bildsensor (4) eine Vielzahl von ersten Pixeln umfasst, darunter ein zentrales Pixel, wobei die optische Achse O durch das zentrale Pixel verläuft,
∘ das optische Mittel, zwischen der Fläche F1 (11) und dem Bildsensor (4), eine optische Abbildungsfunktion aufweist, vorzugsweise zwischen der Fläche F2 (12) und dem Bildsensor,
∘ die Verbundverglasung (100) zwischen der Fläche F1 (11) und dem Bildsensor einen Deflektor (5) umfasst, wobei der Deflektor (5) ein diffraktives Element ist, das konfiguriert ist, um einen äußeren Lichtstrahl A, der auf die Fläche F1 (11) der Verbundverglasung (100) mit einem Einfallswinkel ungleich null relativ zu der Normalen zu der äußeren Scheibe trifft, abzulenken und ihn entlang der optischen Achse O auf das zentrale Pixel umzuleiten.

2. Vorrichtung nach Anspruch 1, wobei der Lichtstrahl A einen Einfallswinkel θ mit der Normalen zu der äußeren Scheibe der Verbundverglasung (100) aufweist und dieser Winkel θ höchstens gleich θ1 ist, der einem Winkel der Fläche F1 (11) mit der Normalen zu der Verglasung in dem Kamerabereich (60) in dem montierten Zustand entspricht.

3. Vorrichtung nach einem der vorstehenden Ansprüche, wobei das optische Mittel und/oder der Deflektor (5) auf der Seite der Fläche F2 (12) angeordnet sind/ist, auf der Fläche F2 (12) oder zwischen der Fläche F2 (12) und dem Bildsensor (4) ausgebildet sind/ist.

4. Vorrichtung nach einem der vorstehenden Ansprüche, wobei der Deflektor (5) eine winkelvariable Ablenkung aufweist, die in Abhängigkeit von dem Einfallswinkel auf den Deflektor (5) variiert.

5. Vorrichtung nach einem der vorstehenden Ansprüche, wobei der Deflektor (5) ein erstes Hologramm (5') ist, das vorzugsweise auf der Fläche F2 (12) eingraviert ist, oder der Deflektor (5) ein erstes Volumenhologramm (5') ist, das vorzugsweise auf die Fläche F2 (12) gelegt oder aufgeklebt ist.

6. Vorrichtung nach dem vorstehenden Anspruch, wobei das Hologramm (5') ein Volumenhologramm ist und aus einem Photopolymermaterial hergestellt ist, insbesondere in Form einer auf die Fläche F2 (12) geklebten oder gelegten Folie oder einer Beschichtung auf der Fläche F2 (12).

7. Vorrichtung nach einem der vorstehenden Ansprüche, wobei der Deflektor (5) ein Vollfeld-Hologramm (5') oder ein pixelisiertes Hologramm (5') ist.

8. Vorrichtung nach einem der vorstehenden Ansprüche, wobei das optische Mittel eine Sammellinse (5a) ist.

9. Vorrichtung nach einem der vorstehenden Ansprüche, wobei das optische Mittel ein Hologramm (5') ist, das eine Sammellinse bildet und zwischen dem Deflektor (5) und dem Bildsensor (4) positioniert ist.

10. Vorrichtung nach einem der Ansprüche 1 bis 8, wobei der Deflektor (5) außerdem das optische Mittel bildet, das eine Sammellinse ist, insbesondere mit einer Brennweite unter einem Zentimeter und/oder kleiner als eine Diagonale des als Matrix gewählten Bildsensors (4).

11. Vorrichtung nach einem der vorstehenden Ansprüche, wobei das diffraktive Element (5) ein pixelisiertes Hologramm ist, das eine Vielzahl von zweiten Pixeln umfasst, wobei das pixelisierte Hologramm konfiguriert ist, um eine Vielzahl von einfallenden Lichtstrahlen in unterschiedlichen Winkeln von den zweiten Pixeln zu den unterschiedlichen ersten Pixeln des Bildsensors (4) konvergieren zu lassen, um ein Bild auf dem Bildsensor (4) zu bilden.

12. Vorrichtung nach einem der Ansprüche 1 bis 7, wobei das optische Mittel eine Blende (51) ist, und die Verglasung vorzugsweise einen Hohlraum aufweist, insbesondere eine Öffnung (3') in der Verbundzwischenlage (3), die zwischen dem Deflektor (5) und dem Bildsensor (4) positioniert ist, um eine Lochkamera zu bilden, und der Bildsensor (4) auf die Fläche F3 (13) gelegt oder geklebt ist.

13. Vorrichtung nach einem der vorstehenden Ansprüche, wobei das optische Mittel zwischen der Fläche F2 (12) und F3 (13) höchstens 1 mm von dem Bildsensor (4) beabstandet ist und vorzugsweise mindestens 0,15 mm, vorzugsweise auf der Fläche F2 (12) oder höchstens 0,1 mm von der Fläche F2 (12) beabstandet.

14. Vorrichtung nach einem der vorstehenden Ansprüche, wobei der Kamerabereich (60) ein Randbereich der Verglasung ist, im Besonderen ein oberer Rand der Verglasung, der insbesondere ein Aussparungsbereich eines peripheren Abdeckrahmens ist, im Besonderen in Kontakt mit und sogar auf der Fläche F2 (12).

15. Vorrichtung nach einem der vorstehenden Ansprüche, wobei die Kamera monochromatisch mit einem ersten Kanal bei einer ersten Wellenlänge LB1 ist, und das diffraktive Element ein erstes Hologramm ist, das bei der ersten Wellenlänge LB1 beugt, oder dadurch, dass die Kamera mehrkanalig mit mehreren Wellenlängen ist und das diffraktive Element ein Mehrband-Hologramm ist, das bei den mehreren Wellenlängen der Kanäle beugt, oder die Verglasung ein weiteres Hologramm oder mehrere weitere Hologramme umfasst, um bei den Wellenlängen der Kanäle zu beugen.

16. Fahrzeug, umfassend die Vorrichtung nach einem der vorstehenden Ansprüche, wobei die Verbundverglasung (100) in einem vordefinierten Winkel θ1 relativ zu der Normalen an einem Einfallspunkt auf der Fläche F4 geneigt ist, wobei θ1 vorzugsweise von 45 bis 70° für ein Straßenfahrzeug wie ein Auto reicht, oder vorzugsweise höchstens 5° für ein Straßentransportfahrzeug wie einen Bus oder einen Lastkraftwagen beträgt.

## Claims

1. A device comprising a laminated automotive glazing (100), in particular a road or rail vehicle, in particular a windshield, rear window or side window, comprising:
- A glass sheet, known as an outer sheet, comprising a first main face (11), known as F1, and a second main face (12), known as F2,
- A glass sheet called an inner sheet comprising a third main face (13) called F3 and a fourth main face (14) called F4,
- A polymer lamination interlayer (3) between face F2 (12) and face F3 (13),
- a transparent zone (60) known as the camera zone
the device comprising, facing the camera zone (60) of the laminated glazing (100), a camera, with an optical axis O, comprising:
- An image sensor (4), an optical means having an optical imaging function, **characterized in that**:
∘ the image sensor (4) is positioned between the face F2 (12) and F3 (13) suitable for receiving light rays passing through the outer sheet in the camera zone (60), the image sensor (4) comprising a plurality of first pixels including a central pixel, the optical axis O passing through said central pixel,
∘ between face F1 (11) and the image sensor (4), the optical means having an optical imaging function, preferably between face F2 (12) and the image sensor,
∘ The laminated glazing (100) comprises a deflector (5) between the face F1 (11) and the image sensor, the deflector (5) being a diffractive element configured to deflect an external light ray A arriving on the face F1 (11) of the laminated glazing (100) with a non-zero angle of incidence relative to the normal to the outer sheet and redirect it along the optical axis O onto the central pixel.

2. The device according to claim 1, wherein the light ray A has an angle of incidence θ with the normal to the outer sheet of the laminated glazing (100) and this angle θ is equal to at most θ1 corresponding to an angle of the face F1 (11) with the normal to the glazing in the camera zone (60) in the mounted position.

3. The device according to one of the preceding claims, wherein the optical means and/or the deflector (5) are on the face F2 (12), formed on the face F2 (12) or between the face F2 (12) and the image sensor (4).

4. The device according to one of the preceding claims, wherein the deflector (5) is angularly variable, varying as a function of the angle of incidence on the deflector (5).

5. The device according to one of the preceding claims, wherein the deflector (5) is a first hologram (5') preferably engraved on the face F2 (12) or the deflector (5) is a first volume hologram (5'), preferably applied or adhered to the face F2 (12).

6. The device according to the preceding claim, wherein the hologram (5') is a volume hologram and is made of a photopolymer material, in particular in the form of a film bonded or applied to the face F2 (12) or a coating on the face F2 (12).

7. The device according to one of the preceding claims, wherein the deflector (5) is a full-field hologram (5') or a pixelated hologram (5').

8. The device according to one of the preceding claims, wherein the optical means is a converging lens (5a).

9. The device according to one of the preceding claims, wherein the optical means is a hologram (5') forming a converging lens, positioned between the deflector (5) and the image sensor (4).

10. The device according to one of claims 1 to 8, wherein the deflector (5) also forms said optical means which is a convergent lens in particular with a focal length that is subcentimetric and/or less than a diagonal of the image sensor (4) chosen matrix.

11. The device according to one of the preceding claims, wherein the diffractive element (5) is a pixelated hologram comprising a plurality of second pixels, the pixelated hologram being configured to converge a plurality of incident light rays of different angles from the second pixels onto different first pixels of the image sensor (4) to form an image on the image sensor (4).

12. The device according to one of claims 1 to 7, wherein the optical means is a diaphragm (51), and preferably the glazing comprises a cavity, in particular an opening (3') in the lamination interlayer (3), positioned between the deflector (5) and the image sensor (4) to form a pinhole, and the image sensor (4) is applied or adhered to the face F3 (13).

13. The device according to one of the preceding claims, wherein the optical means is between the face F2 (12) and F3 (13) is distant by at most 1 mm from the image sensor (4) and preferably by at least 0.15 mm, preferably on the face F2 (12) or distant by at most 0.1 mm from the face F2 (12).

14. The device according to one of the preceding claims, wherein the camera zone (60) is a peripheral zone of the glazing, in particular the upper edge of the glazing, in particular which is a reserved zone of a peripheral masking frame, in particular in contact and even on the face F2 (12).

15. The device according to one of the preceding claims, wherein the camera is monochromatic with a first channel at a first wavelength LB1 and the diffractive element is a first hologram diffracting at said first wavelength LB1, or in that the camera is multichannel with several wavelengths, and the diffractive element is a multiband hologram diffracting at said several wavelengths of said channels or the glazing comprises another hologram or several other holograms to diffract at said wavelengths of the channels.

16. A vehicle comprising the device according to one of the preceding claims, wherein the laminated glazing (100) is inclined by a predefined angle θ1 with respect to the normal to a point of incidence on the face F4, θ1 preferably ranging from 45 to 70° for a road vehicle such as a car or preferably by at most 5° for a road transport vehicle, such as a bus or truck.
